# EUROPEAN PATENT SPECIFICATION

(11) **EP 4 023 819 B1**
(45) Date of publication and mention of the grant of the patent: **02.08.2023**
(21) Application number: 21214619.5
(22) Date of filing: 15.12.2021
(51) Int. Cl.: E02F 9/18, E02F 9/08, H01Q 1/12

(54) **WORKING MACHINE**
ARBEITSMASCHINE
MACHINE DE TRAVAIL

(30) Priority: 25.12.2020 JP 2020216406
(43) Date of publication of application: 06.07.2022
(73) Proprietor: KOBELCO CONSTRUCTION MACHINERY CO., LTD., Hiroshima-shi Hiroshima 731-5161 (JP)
(72) Inventor: YURI, Kazuhiro, Hiroshima 731-5161 (JP); KARINO, Shinji, Hiroshima 731-5161 (JP); OSAKU, Yasutaka, Hiroshima 731-5161 (JP); MICHII, Kizuku, Hiroshima 731-5161 (JP)
(74) Representative: TBK

(56) References cited:
- CN-A- 110 654 321
- JP-A- 2008 102 097
- JP-A- 2009 127 188

## Description

### Field of the Invention

The present disclosure relates to a working machine of a small type, such as a short rear tail swing hydraulic excavator.

### Background Art

A working machine, such as a hydraulic excavator, includes: an upper frame slewably supported on a lower body, e.g., lower traveling body; a bonnet (hood) which covers a machine chamber defined on the upper frame from above; and a counterweight supported on a rear portion of the upper frame. The machine chamber accommodates various devices, e.g., an engine, arranged therein. The working machine is occasionally provided with an antenna for a satellite positioning system, e.g., GNSS (Global Navigation Satellite System). For instance, Japanese Unexamined Patent Publication No. 2009-127188 discloses a counterweight for a working machine in which a base plate having a polygonal shape in a plan view is fixedly attachable to a top plate of the counterweight, and a satellite antenna is fixedly attachable onto the base plate.

However, in a case where the working machine is of a small type, such as a short rear tail swing hydraulic excavator, it is difficult to ensure an enough space on a top surface of a counterweight for attachment of a member (antenna support member), such as the base plate, for supporting the antenna. More details will be described below.

In the working machine of the small type, the counterweight has an outer surface having such a shape as to cover left and right portions and a rear portion of the machine chamber, and a top surface extending along the outer surface. Specifically, the counterweight has: an outer surface having an arc shape, in a plan view, following a circular slewing path on which, for example, a rear end of the counterweight passes in a slewing operation; and a top surface extending along the outer surface. In the working machine of the small type, the bonnet is arranged so that side sections and a rear section of an outer edge portion of the bonnet extend along the counterweight having the arc shape on the top surface of the counterweight or at a position closer to the top surface in consideration of the current tendency of a size increase in the bonnet. Under the circumstances, the working machine of the small type faces difficulty in ensuring an enough space on the top surface of the counterweight for the attachment of the antenna support member, such as the base plate disclosed in Japanese Unexamined Patent

An alternative proposed way may include attaching an antenna support member to the top surface of the bonnet that is other than the top surface of the counterweight. However, a typical bonnet is aimed at covering the machine chamber from above, and accordingly fails to have enough strength to stably support the antenna support member. Therefore, the bonnet is required to be reinforced for the attachment of the antenna support member to the top surface of the bonnet. However, generally, an extra space is hardly seen between the bonnet and each of the various devices arranged in the machine chamber. Hence, it is difficult to reinforce the lower portion of the bonnet. Furthermore, reinforcement of the upper portion of the bonnet leads to an increase in the size of the bonnet. Moreover, it is necessary to set a large dimensional tolerance (attachment tolerance) of the antenna support member in consideration of the dimensional tolerance of the counterweight and the bonnet for attachment of the antenna support member to the counterweight and bonnet such that the antenna support member strides over the counterweight and the bonnet.

### Summary of the Invention

The present disclosure has been made in view of the drawbacks described above, and an object thereof is to provide a working machine of a small type which enables attachment of an antenna support member to an upper end of a counterweight in a state where the antenna support member is stably supported thereon.

A provided working machine includes: an upper frame slewably mounted on a lower body; a bonnet which covers a machine chamber defined on the upper frame from above; a counterweight supported on a rear portion of the upper frame, and having: a weight outer surface having such a shape as to cover at least a part of left and right portions of the machine chamber and cover a rear portion thereof; a weight inner surface located opposite the weight outer surface and closer to the machine chamber than the weight outer surface; and a weight top surface extending along an upper end of the weight outer surface between the weight outer surface and the weight inner surface; and an antenna support member having an antenna attachment part to which an antenna is attachable; and a plurality of legs for supporting the antenna attachment part. The counterweight has a weight recess part recessed from the weight outer surface toward the weight inner surface at the upper end of the weight outer surface. The legs include a first leg having a first fixed part fixed to the weight recess part, and a second leg having a second fixed part fixed to the weight recess part or the weight top surface at a position deviating upward from the first fixed part.
Fig. 1 is a sideview of a working machine according to an embodiment.
Fig. 2 is a plan view of the working machine.
Fig. 3 is a perspective view of a counterweight, two antenna support members, and antennas respectively supported by the antenna support members, each included in the working machine.
Fig. 4 is another perspective view of the counterweight, the two antenna support members, and the antennas respectively supported by the antenna support members, each included in the working machine.
Fig. 5 is an enlarged perspective view of a right portion of the counterweight and the right antenna support member in the working machine.
Fig. 6 is an enlarged perspective view of the right portion of the counterweight in the working machine.
Fig. 7 is another enlarged perspective view of the right portion of the counterweight in the working machine.
Fig. 8 is an enlarged perspective view of a left portion of the counterweight and the left antenna support member in the working machine.
Fig. 9 is an enlarged perspective view of the left portion of the counterweight in the working machine.
Fig. 10 is another enlarged perspective view of the left portion of the counterweight in the working machine.
Fig. 11 shows the right antenna support member viewed horizontally in one direction.
Fig. 12 shows the right antenna support member viewed horizontally in a direction perpendicular the one direction.
Fig. 13 is a plan view of the right antenna support member.
Fig. 14 shows the left antenna support member viewed horizontally in one direction.
Fig. 15 shows the left antenna support member viewed horizontally in a direction perpendicular to the one direction.
Fig. 16 is a plan view of the left antenna support member.
Fig. 17 is a cross-sectional view taken along the line XVII-XVII in Fig. 2.

### Description of Embodiments

Hereinafter, an embodiment of this disclosure will be described with reference to the accompanying drawings.

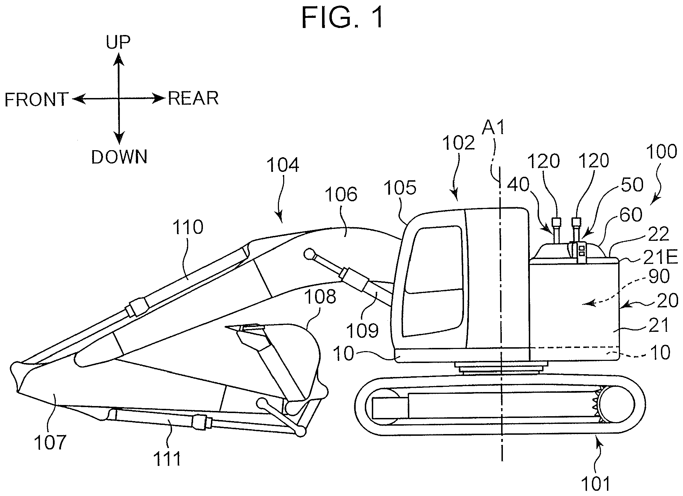

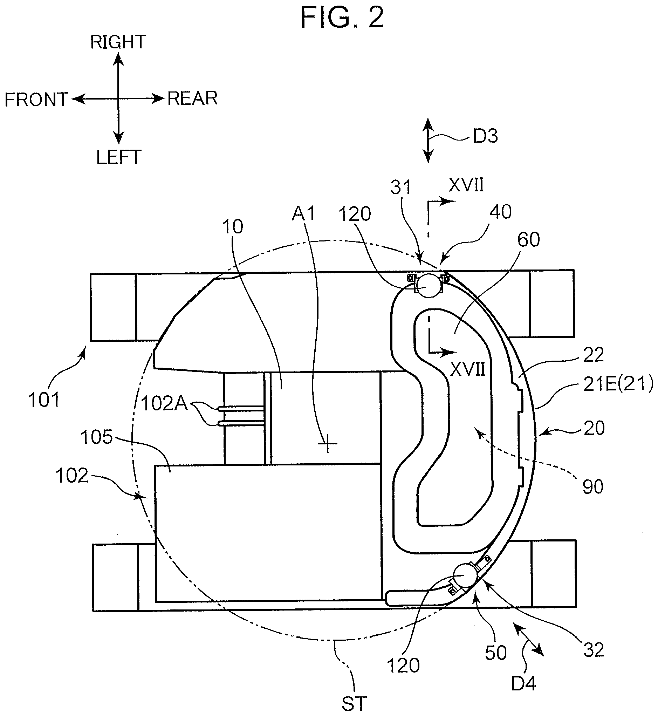

Fig. 1 is a sideview of a hydraulic excavator 100 according to an embodiment of the present invention, and Fig. 2 is a plan view thereof. The hydraulic excavator 100 according to the embodiment as shown in Fig. 1 and Fig. 2 is a short rear tail swing hydraulic excavator. The short rear tail swing hydraulic excavator serves as an exemplary working machine of a small type.

The hydraulic excavator 100 includes a lower traveling body 101, an upper slewing body 102 slewably supported on the lower traveling body 101, and a tiltable member 104 tiltably supported on the upper slewing body 102. Fig. 2 omits the illustration of the tiltable member 104. The lower traveling body 101 serves as an exemplary lower body.

The directions denoted by "UP", "DOWN", "FRONT", "REAR", "LEFT", and "RIGHT" in the drawings are based on a direction in which the upper slewing body 102 of the hydraulic excavator 100 faces. It should be noted that each of the directions is defined for convenience to explain the hydraulic excavator 100 according to the embodiment, and thus does not delimit any moving direction or use way of the hydraulic excavator 100.

The lower traveling body 101 includes a pair of left and right crawler traveling devices and an unillustrated lower frame connecting the crawler type travelling devices and supporting the upper slewing body 102 thereon.

The upper slewing body 102 includes: an upper frame 10 supported on the lower frame of the lower traveling body 101 slweably about a vertical axis A1; a cab 105 supported on a front portion of the upper frame 10; a bonnet (hood) 60 which covers a machine chamber 90 defined on the upper frame 10 from above; a counterweight 20 supported on a rear portion of the upper frame 10; and a pair of left and right antenna support members 40, 50 (antenna attachment brackets). The machine chamber 90 accommodates various devices, e.g., an unillustrated engine, arranged therein.

The tiltable member 104 includes a boom 106, an arm 107, a bucket 108, a boom cylinder 109, an arm cylinder 110, and a bucket cylinder 111. The boom 106 has a proximal end rotatably attached to a tiltable member attachment part 102A (see Fig. 2) provided in the front portion of the upper frame 10. The arm 107 has a proximal end rotatably attached to a distal end of the boom 106. The bucket 108 is rotatably attached to a distal end of the arm 107. The boom cylinder 109 operates to raise and lower the boom 106 upward and downward with respect to the upper frame 10. The arm cylinder 110 operates to rotate the arm 107 with respect to the boom 106. The bucket cylinder 111 operates to rotate the bucket 108 with respect to the arm 107.

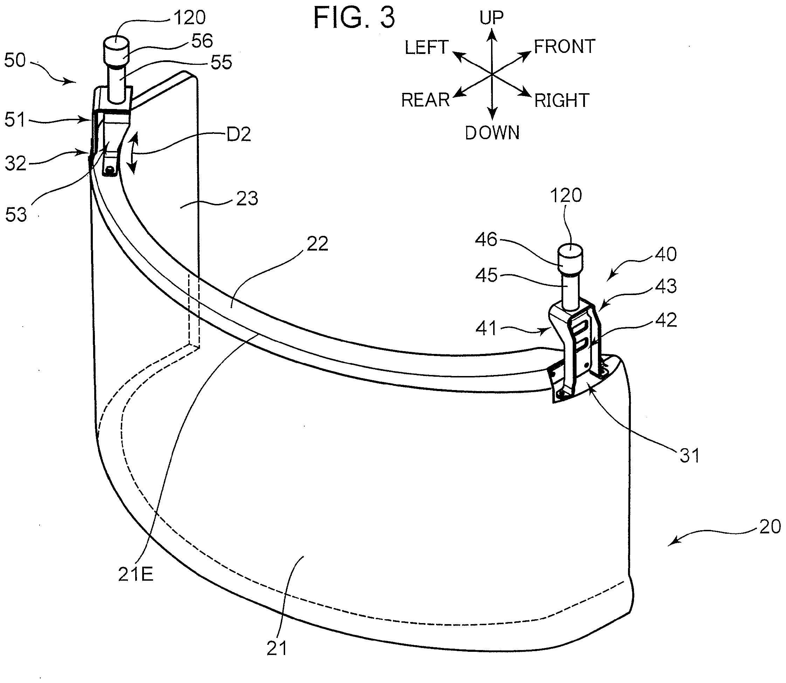

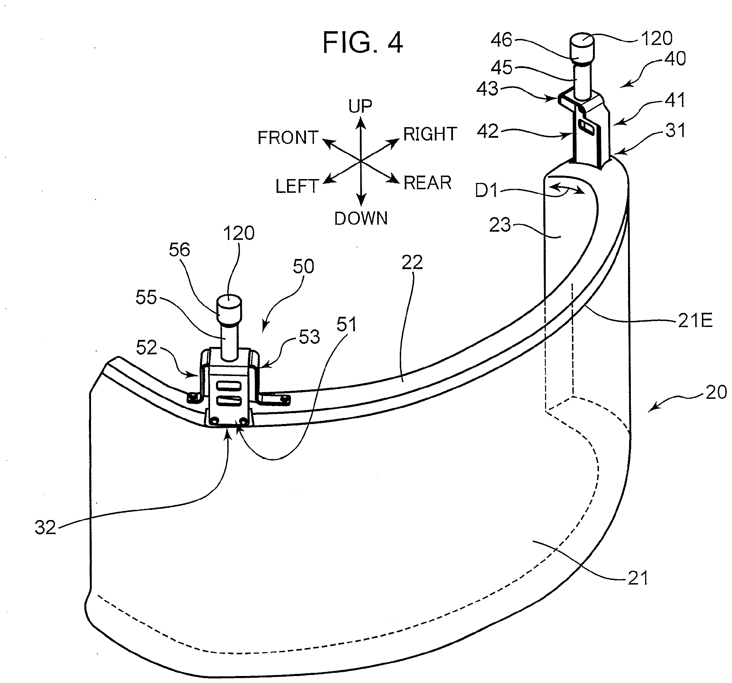

Each of Fig. 3 and Fig. 4 is a perspective view of the counterweight 20, the two antenna support members 40, 50, and antennas 120, 120 respectively supported by the antenna support members. Fig. 3 shows the counterweight 20 viewed from a position diagonally behind the counterweight to the right, and Fig. 4 shows the counterweight 20 viewed from a position diagonally behind the counterweight to the left. In the embodiment, each of the antennas 120, 120 serves as an antenna for a satellite positioning system, such as the GNSS.

As shown in Fig. 1 to Fig. 4, the counterweight 20 has: a weight outer surface 21 having such a shape as to cover a left portion, a right portion, and a rear portion of the machine chamber 90; a weight inner surface 23 located opposite the weight outer surface 21 and closer to the machine chamber 90 than the weight outer surface 21; and a weight top surface 22 extending along an upper end of the weight outer surface 21 between the weight outer surface 21 and the weight inner surface 23. In a plan view shown in Fig. 2, the counterweight 20 has a rear end having an arc shape. In the plan view, at least a part of the right portion of the counterweight 20 may have a section straightly extending in a front-rear direction, and at least a part of the left portion of the counterweight 20 may have a section straightly extending in the front-rear direction. The left portion, the right portion, and the rear portion of the machine chamber 90 are enclosed by the counterweight 20 having the arc shape shown in Fig. 3 and Fig. 4.

The counterweight 20 has a pair of left and right weight recess parts 31, 32. The right weight recess part 31 is defined at an upper end of the right portion of the counterweight 20, specifically, at an upper end of a portion of the counterweight 20 extending to the right of the rear end of the counterweight in front of the rear end. The left weight recess part 32 is defined at an upper end of the left portion of the counterweight 20, specifically, at an upper end of another portion of the counterweight 20 extending to the left of the rear end of the counterweight in front of the rear end.

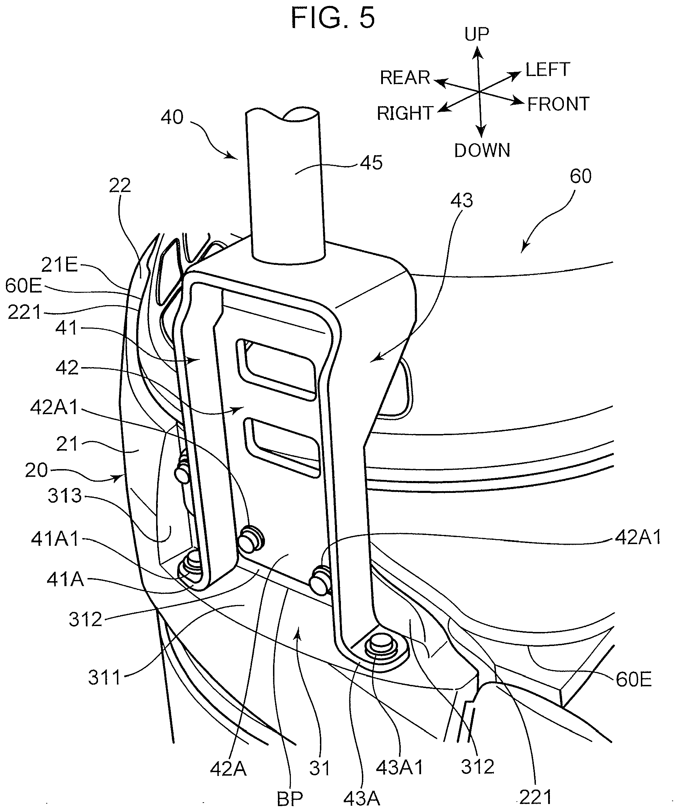

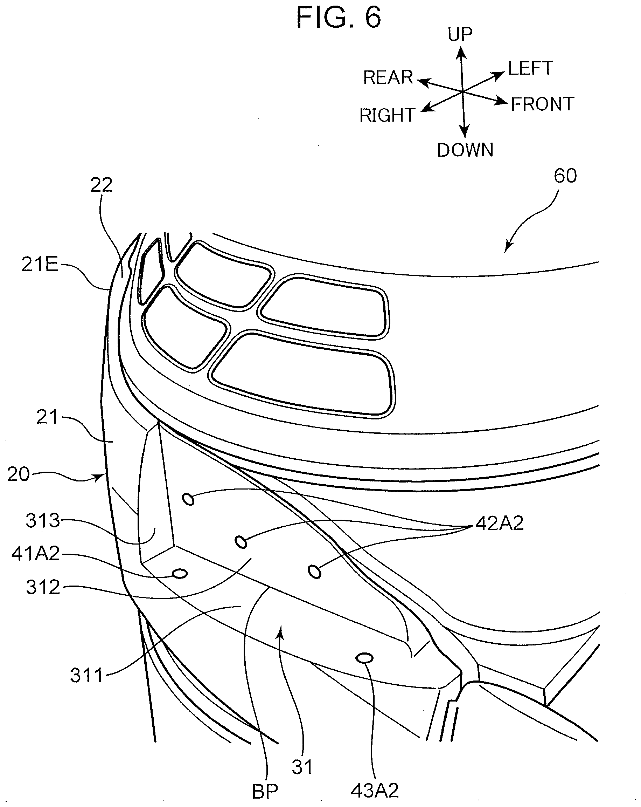

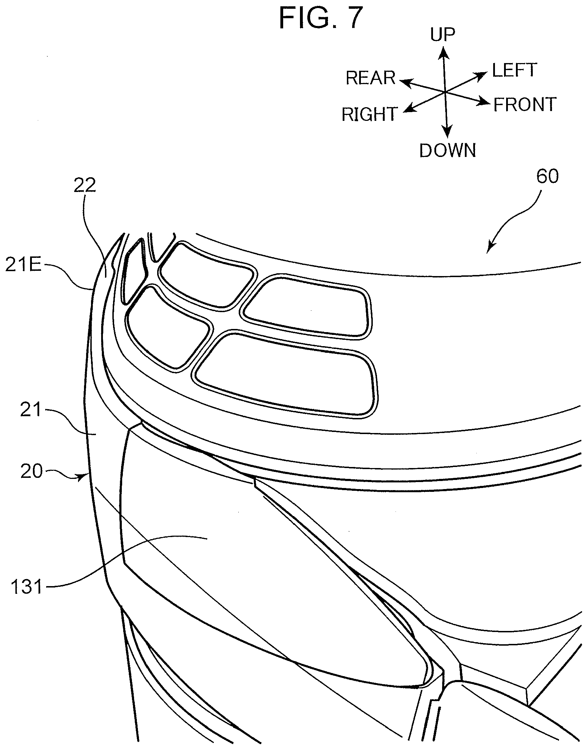

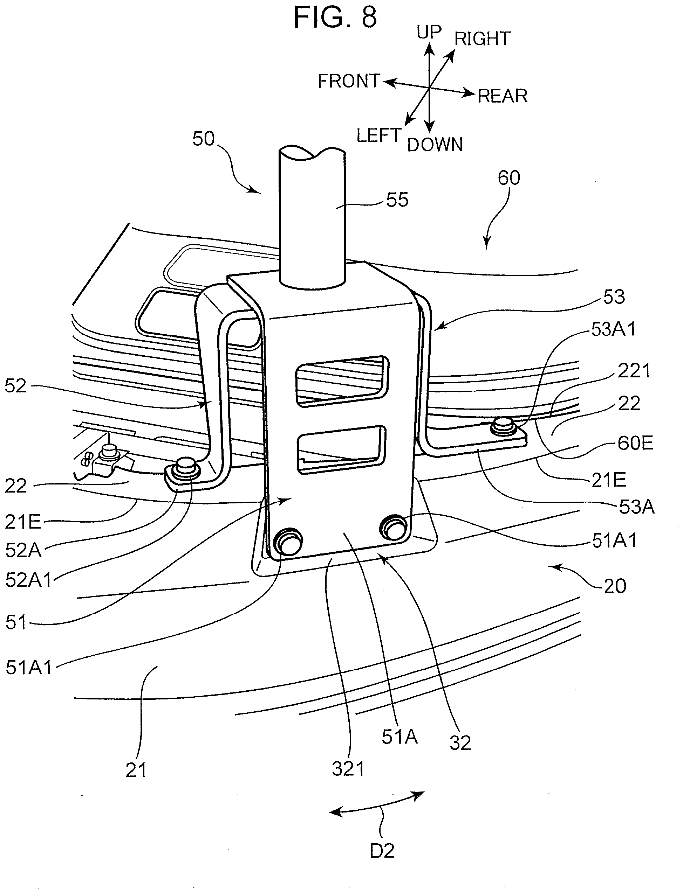

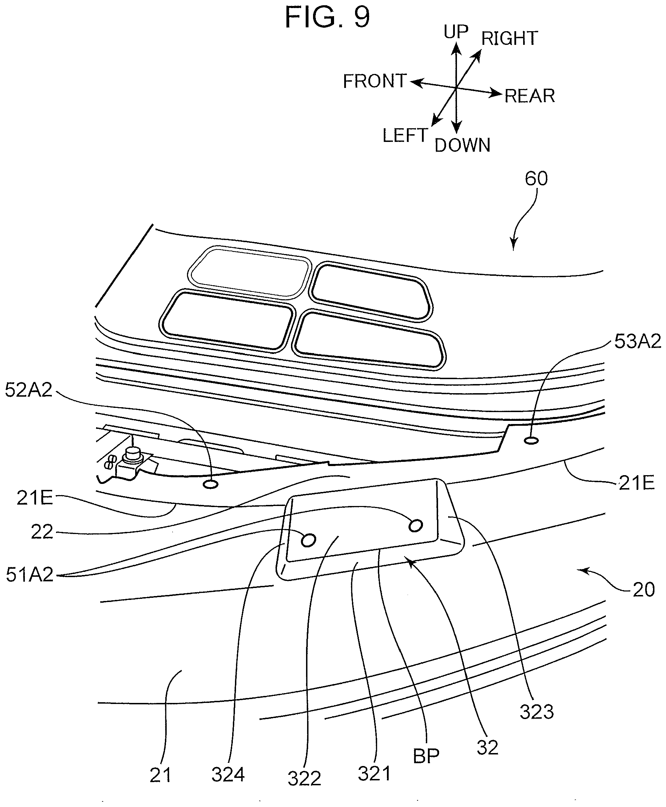

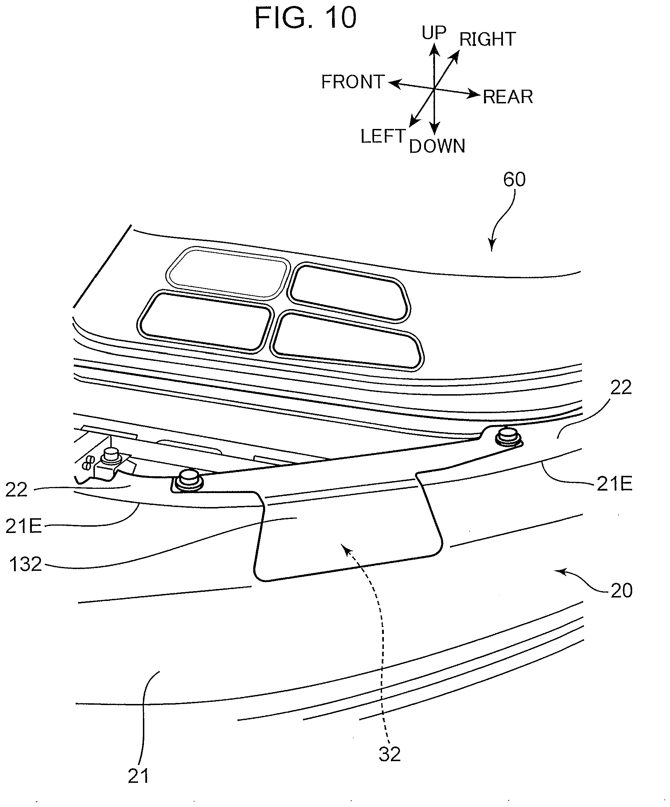

Fig. 5 is an enlarged perspective view of the right portion of the counterweight 20 and the right antenna support member 40. Each of Fig. 6 and Fig. 7 is an enlarged perspective view of the right portion of the counterweight 20. Fig. 8 is an enlarged perspective view of the left portion of the counterweight 20 and the left antenna support member 50. Each of Fig. 9 and Fig. 10 is an enlarged perspective view of the left portion of the counterweight 20.

As shown in Fig. 6, the right weight recess part 31 has a shape recessed from the weight outer surface 21 toward the weight inner surface 23 at an upper end of the weight outer surface 21 of the right portion. In other words, the right weight recess part 31 has a shape recessed from the weight outer surface 21 toward the weight inner surface 23 in a section of the counterweight 20 that includes a part of an upper edge 21E of the weight outer surface 21. The upper edge 21E serves as a boundary between the weight outer surface 21 and the weight top surface 22.

The right weight recess part 31 is defined by a recess bottom surface 311 extending from the weight outer surface 21 toward the weight inner surface 23 in the right portion, a recess side surface 312 extending upward from the recess bottom surface 311 to the weight top surface 22 in the right portion, and a recess rear surface 313. The weight recess part 31 has an upper section opening upward. The recess side surface 312 is continuous to the weight top surface 22.

The recess bottom surface 311 faces upward, and the recess side surface 312 faces outward and opposite the weight inner surface 23. In other words, the recess side surface 312 faces outward in a thickness direction D3 (see Fig. 2) of the counterweight 20. The thickness direction D3 represents a thickness direction of the counterweight 20 in the section where the right weight recess part 31 is defined in the plan view shown in Fig. 2. The recess side surface 312 extends upward from an inner edge of the recess bottom surface 311 (i.e., from an inner edge of the recess bottom surface 311 in the thickness direction D3). The recess bottom surface 311 may be on a horizontal plane or a plane inclined to the horizontal plane. The recess side surface 312 may be on a vertical plane or a plane inclined to the vertical plane.

The recess rear surface 313 extends upward from a rear edge of the recess bottom surface 311 (i.e., from an edge at the rear of the recess bottom surface 311) to the weight top surface 22. The recess rear surface 313 is connected to both the recess bottom surface 311 and the recess side surface 312. The recess rear surface 313 faces forward, diagonally forward right, or diagonally forward left.

In a case where the right antenna support member 40 is not attached to the upper end of the right portion of the counterweight 20, a cover member 131 which can cover the right weight recess part 31 is attached to the upper end of the right portion of the counterweight 20 as shown in Fig. 7.

As shown in Fig. 9, the left weight recess part 32 has a shape recessed from the weight outer surface 21 toward the weight inner surface 23 at an upper end of the weight outer surface 21 in the left portion. In other words, the left weight recess part 32 has a shape recessed from the weight outer surface 21 toward the weight inner surface 23 in another section of the counterweight 20 that includes a part of the upper edge 21E of the weight outer surface 21.

The left weight recess part 32 is defined by a recess bottom surface 321 extending from the weight outer surface 21 toward the weight inner surface 23 in the left portion, a recess side surface 322 extending upward from the recess bottom surface 321 to the weight top surface 22 in the left portion, a recess rear surface 323, and a recess front surface 324. The weight recess part 32 has an upper section opening upward. The recess side surface 322 is continuous to the weight top surface 22. The recess bottom surface 321 and the recess side surface 322 are continuous via a boundary BP between the recess bottom surface 321 and the recess side surface 322.

The recess bottom surface 321 faces upward, and the recess side surface 322 faces outward and opposite the weight inner surface 23. In other words, the recess side surface 322 faces outward in a thickness direction D4 (see Fig. 2) of the counterweight 20. The thickness direction D4 represents a thickness direction of the counterweight 20 in the section where the left weight recess part 32 is defined in the plan view shown in Fig. 2. The recess side surface 322 extends upward from an inner edge of the recess bottom surface 321 (i.e., from an inner edge of the recess bottom surface 321 in the thickness direction D4). The recess bottom surface 321 may be on a horizontal plane or a plane inclined to the horizontal plane. The recess side surface 322 may be on a vertical plane or a plane inclined to the vertical plane.

The recess rear surface 323 extends upward from a rear edge of the recess bottom surface 321 (i.e., from an edge at the rear of the recess bottom surface 321) to the weight top surface 22. The recess rear surface 323 is connected to both the recess bottom surface 321 and the recess side surface 322. The recess rear surface 323 faces forward, diagonally forward left, or diagonally forward right. The recess front surface 324 extends upward from a front edge of the recess bottom surface 321 (i.e., from an edge at the front of the recess bottom surface 321) to the weight top surface 22. The recess front surface 324 is connected to both the recess bottom surface 321 and the recess side surface 322. The recess front surface 324 faces backward, diagonally backward left, or diagonally backward right.

In a case where the left antenna support member 50 is not attached to the upper end of the left portion of the counterweight 20, a cover member 132 which can cover the left weight recess part 32 is attached to the upper end of the left portion of the counterweight 20 as shown in Fig. 10.

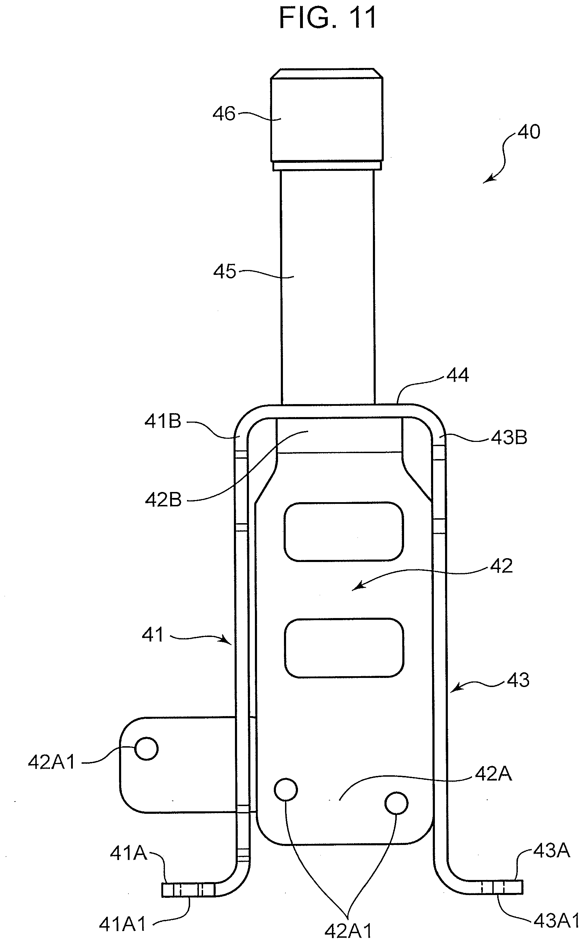

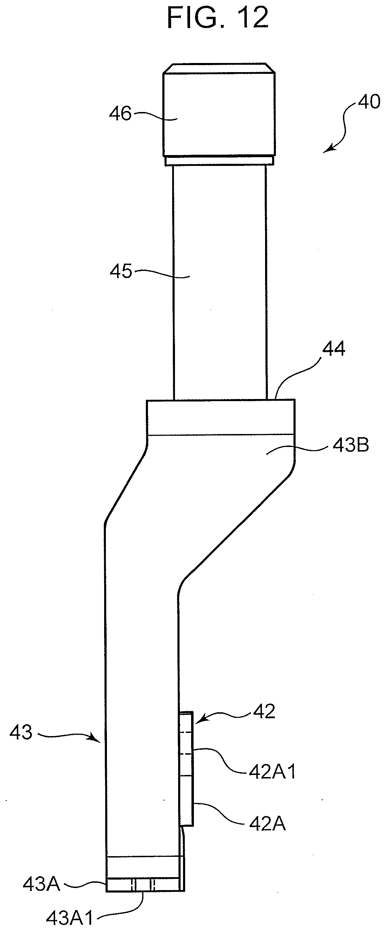

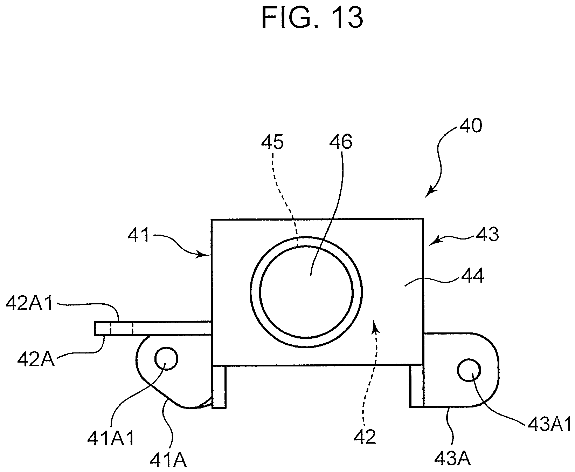

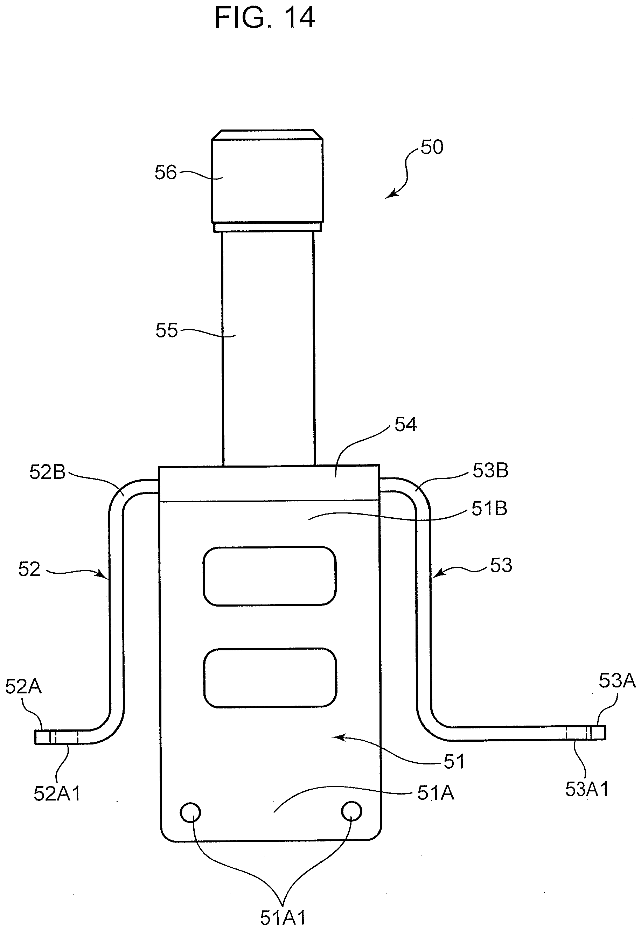

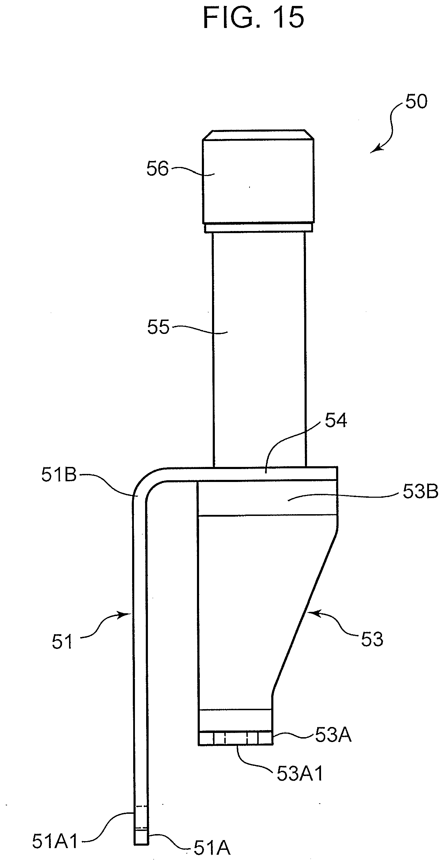

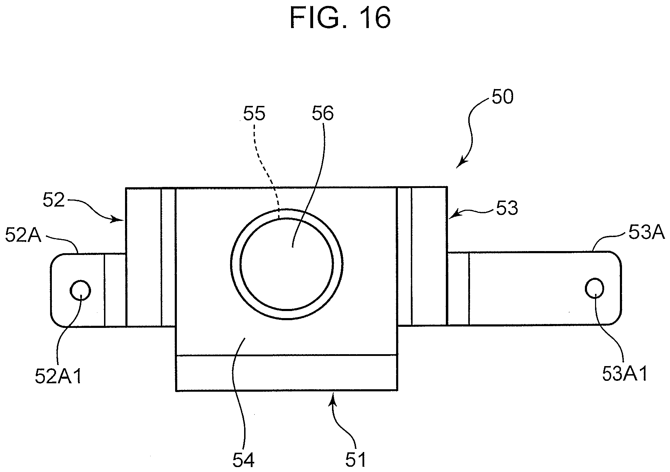

Fig. 11 shows the right antenna support member 40 viewed horizontally in one direction. Fig. 12 shows the right antenna support member 40 viewed horizontally in a direction perpendicular to the one direction. Fig. 13 is a plan view of the right antenna support member 40. Fig. 14 shows the left antenna support member 50 viewed horizontally in one direction. Fig. 15 shows the left antenna support member 50 viewed horizontally in a direction perpendicular to the one direction. Fig. 16 is a plan view of the left antenna support member 50.

In the pair of left and right antenna support members 40, 50, the right antenna support member 40 is attached to the upper end of the right portion of the counterweight 20, and the left antenna support member 50 is attached to the upper end of the left portion of the counterweight 20.

As shown in Fig. 5, and Fig. 11 to Fig. 13, the right antenna support member 40 has an antenna attachment part 45 to which an antenna 120 is attachable, and a plurality of legs for supporting the antenna attachment part 45. The legs of the right antenna support member 40 include a first leg 41, a second leg 42, and a third leg 43. The first leg 41 has a first fixed part 41A forming a lower end of the first leg, and an upper end 41B (first upper end 41B). The second leg 42 has a second fixed part 42A forming a lower end of the second leg, and an upper end 42B (second upper end 42B). The third leg 43 has a third fixed part 43A forming a lower end of the third leg, and an upper end 43B (third upper end 43B).

As shown in Fig. 8, and Fig. 14 to Fig. 16, the left antenna support member 50 has an antenna attachment part 55 to which an antenna 120 is attachable, and a plurality of legs for supporting the antenna attachment part 55. The legs of the left antenna support member 50 include a first leg 51, a second leg 52, and a third leg 53. The first leg 51 has a first fixed part 51A forming a lower end of the first leg, and an upper end 51B (first upper end 51B). The second leg 52 has a second fixed part 52A forming a lower end of the second leg, and an upper end 52B (second upper end 52B). The third leg 53 has a third fixed part 53A forming a lower end of the third leg, and an upper end 53B (third upper end 53B).

Each of the antenna attachment parts 45, 55 is composed of a support (antenna support) having a cylindrical shape extending in an up-down direction. The antenna attachment part 45 has an upper end 46 and the antenna attachment part 55 has an upper end 56, each of the upper ends having such a shape as to be engageable with an unillustrated engagement part provided to the corresponding antenna 120.

The antenna attachment part 45 has a lower end to which a base 44 is fixedly attached so that the lower end is arranged thereon. The upper end 41B of the first leg 41, the upper end 42B of the second leg 42, and the upper end 43B of the third leg 43 are connected to the base 44. The upper end 41B of the first leg 41, the upper end 42B of the second leg 42, and the upper end 43B of the third leg 43 are connected to the antenna attachment part 45 via the base 44, but may be directly connected to the antenna attachment part 45 without using the base 44. Similarly, the antenna attachment part 55 has a lower end to which a base 54 is fixedly attached so that the lower end is arranged thereon. The upper end 51B of the first leg 51, the upper end 52B of the second leg 52, and the upper end 53B of the third leg 53 are connected to the base 54. The upper end 51B of the first leg 51, the upper end 52B of the second leg 52, and the upper end 53B of the third leg 53 are connected to the antenna attachment part 55 via the base 54, but may be directly connected to the antenna attachment part 55 without using the base 54. Each of the bases 44, 54 may be integrated with at least one of the first leg, the second leg, and the third leg, or may be, at first, formed independently of the first leg, the second leg, and the third leg, and then joined to the legs later.

The upper end 41B of the first leg 41 is connected to one end of the base 44. The first leg 41 extends downward from the upper end 41B to the first fixed part 41A. The upper end 43B of the third leg 43 is connected to another end of the base 44 that is opposite to the one end of the base 44 across the lower end of the antenna attachment part 45. The third leg 43 extends downward from the upper end 43B to the third fixed part 43A. The upper end 42B of the second leg 42 is connected to an intermediate portion of the base 44 between the one end and the another end thereof. The second leg 42 extends downward from the upper end 42B to the second fixed part 42A.

The upper end 52B of the second leg 52 is connected to one end of the base 54. The second leg 52 extends downward from the upper end 52B to the second fixed part 52A. The upper end 53B of the third leg 53 is connected to another end of the base 54 that is opposite to the one end of the base 54 across the lower end of the antenna attachment part 55. The third leg 53 extends downward from the upper end 53B to the third fixed part 53A. The upper end 51B of the first leg 51 is connected to an intermediate portion of the base 54 between the one end and the another end thereof. The first leg 51 extends downward from the upper end 51B to the first fixed part 51A.

As shown in Fig. 5, in the right antenna support member 40, the first fixed part 41A of the first leg 41 is fixedly attached to the recess bottom surface 311 defining the right weight recess part 31, the second fixed part 42A of the second leg 42 is fixedly attached to the recess side surface 312 defining the weight recess part 31, and the third fixed part 43A of the third leg 43 is fixedly attached to the recess bottom surface 311 defining the weight recess part 31. In this manner, the right antenna support member 40 is attached to the upper end of the right portion of the counterweight 20. The third fixed part 43A is fixedly attached to the recess bottom surface 311 at a distance from the first fixed part 41A in a direction in which the boundary BP (see Fig. 5 and Fig. 6) between the recess bottom surface 311 and the recess side surface 312 extends. The boundary BP connects the recess bottom surface 311 and the recess side surface 312 to each other.

As shown in Fig. 5, and Fig. 11 to Fig. 13, in the first leg 41, the first fixed part 41A has a lower surface being in contact with the recess bottom surface 311 defining the weight recess part 31. The first fixed part 41A has at least one bolt insertion hole 41A1 penetrating the first fixed part 41A in a thickness direction thereof (in a direction perpendicular to the recess bottom surface 311). As shown in Fig. 6, the recess bottom surface 311 is formed with a threaded hole 41A2 for receiving a bolt to be threaded therewith at a position corresponding to the bolt insertion hole 41A1.

In the second leg 42, the second fixed part 42A has a side surface being in contact with the recess side surface 312 defining the weight recess part 31. The second fixed part 42A has at least one bolt insertion hole 42A1 penetrating the second fixed part 42A in a thickness direction thereof (in a direction perpendicular to the recess side surface 312). As shown in Fig. 6, the recess side surface 312 is formed with a threaded hole 42A2 for receiving a bolt to be threaded therewith at a position corresponding to the bolt insertion hole 42A1.

In the third leg 43, the third fixed part 43A has a lower surface being in contact with the recess bottom surface 311 defining the weight recess part 31. The third fixed part 43A has at least one bolt insertion hole 43A1 penetrating the third fixed part 43A in a thickness direction thereof (in a direction perpendicular to the recess bottom surface 311). As shown in Fig. 6, the recess bottom surface 311 is formed with a threaded hole 43A2 for receiving a bolt to be threaded therewith at a position corresponding to the bolt insertion hole 43A1.

As shown in Fig. 5, the bolts inserted through the bolt insertion hole 41A1 of the first fixed part 41A, the bolt insertion hole 42A1 of the second fixed part 42A, and the bolt insertion hole 43A1 of the third fixed part 43A are respectively threaded with the threaded holes 41A2, 42A2, 43A2, thereby attaching the right antenna support member 40 to the upper end of the right potion of the counterweight 20. The bolts for fixedly attaching the first fixed part 41A and the third fixed part 43A respectively to the recess bottom surface 311 are threaded with the corresponding threaded holes so that the shafts of the bolts face in a direction perpendicular to the recess bottom surface 311 as shown in Fig. 5. The bolt for fixedly attaching the second fixed part 42A to the recess side surface 312 is threaded with the threaded hole so that the shaft of the bolt faces in a direction perpendicular to the recess side surface 312 as shown in Fig. 5.

As shown in Fig. 2, the right antenna support member 40 including the first leg 41, the second leg 42, and the third leg 43 is at a radially inner position than a slewing path ST serving as a circular slewing path on which a section of the weight outer surface 21 having a maximum slewing radius passes in a slewing operation. The antenna 120 supported by the right antenna support member 40 is at a radially inner position than the slewing path ST. The section of the weight outer surface 21 having the maximum slewing radius may be determined depending on the shape of the counterweight 20, and can be, for example, a rear end section of the weight outer surface 21 (rear end of the counterweight 20).

As shown in Fig. 8, in the left antenna support member 50, the first fixed part 51A of the first leg 51 is fixedly attached to the recess side surface 322 defining the left weight recess part 32, the second fixed part 52A of the second leg 52 is fixedly attached to the weight top surface 22, and the third fixed part 53A of the third leg 53 is fixedly attached to the weight top surface 22. In this manner, the left antenna support member 50 is attached to the upper end of the left portion of the counterweight 20. The third fixed part 53A is fixedly attached to the weight top surface 22 at a distance from the second fixed part 52A in a direction D2 in which the weight top surface 22 extends. The direction D2 in which the weight top surface 22 extends represents a longitudinal direction of the weight top surface 22 in the section where the left weight recess part 32 is defined, as shown in Fig. 3 and Fig. 8. A direction D1 in which the weight top surface 22 extends as shown in Fig. 4 represents a longitudinal direction of the weight top surface 22 in the section where the right weight recess part 31 is defined. In the embodiment, as shown in Fig. 8, the weight top surface 22 has a bonnet mount section 221 adjacent to the section where the third fixed part 53A is fixed. In other words, each of the section of the weight top surface 22 to which the third fixed part 53A is fixedly attached and the bonnet mount section 221 adjacent thereto is a part of the weight top surface 22. The bonnet mount section 221 receives a part of an outer edge portion 60E of the bonnet 60 mounted thereon. The recess side surface 322 defining the weight recess part 32 is continuous to the bonnet mount section 221 of the weight top surface 22.

The second fixed part 52A, the first fixed part 51A, and the third fixed part 53A are arranged in an order thereof at intervals in the direction D2 in which the weight top surface 22 extends when the fixed parts 52A, 51A, 53A are viewed in the thickness direction D4 of the counterweight 20.

As shown in Fig. 8, Fig. 14 to Fig. 16, in the first leg 51, the first fixed part 51A has a side surface being in contact with the recess side surface 322 defining the weight recess part 32. The first fixed part 51A has at least one bolt insertion hole 51A1 penetrating the first fixed part 51A in a thickness direction thereof (in a direction perpendicular to the recess side surface 322). As shown in Fig. 9, the recess side surface 322 is formed with a threaded hole 51A2 for receiving a bolt to be threaded therewith at a position corresponding to the bolt insertion hole 51A1.

In the second leg 52, the second fixed part 52A has a lower surface being in contact with the weight top surface 22. The second fixed part 52A has at least one bolt insertion hole 52A1 penetrating the second fixed part 52A in a thickness direction thereof (in a direction perpendicular to the weight top surface 22). As shown in Fig. 9, the weight top surface 22 is formed with a threaded hole 52A2 for receiving a bolt to be threaded therewith at a position corresponding to the bolt insertion hole 52A1.

In the third leg 53, the third fixed part 53A has a lower surface being in contact with the weight top surface 22. The third fixed part 53A has at least one bolt insertion hole 53A1 penetrating the third fixed part 53A in a thickness direction thereof (in a direction perpendicular to the weight top surface 22). As shown in Fig. 9, the weight top surface 22 is formed with a threaded hole 53A2 for receiving a bolt to be threaded therewith at a position corresponding to the bolt insertion hole 53A1.

As shown in Fig. 8, the bolts inserted through the bolt insertion hole 51A1 of the first fixed part 51A, the bolt insertion hole 52A1 of the second fixed part 52A, and the bolt insertion hole 53A1 of the third fixed part 53A are respectively threaded with the threaded holes 51A2, 52A2, 53A2, thereby attaching the left antenna support member 50 to the upper end of the left portion of the counterweight 20. The bolt for fixedly attaching the first fixed part 51A to the recess side surface 322 is threaded with the threaded hole so that the shaft of the bolt faces in a direction perpendicular to the recess side surface 322 as shown in Fig. 8. The bolts for fixedly attaching the second fixed part 52A and the third fixed part 53A respectively to the weight top surface 22 are threaded with the corresponding threaded holes so that the shafts of the bolts face in a direction perpendicular to the weight top surface 22 as shown in Fig. 8.

The left antenna support member 50 including the first leg 51, the second leg 52, and the third leg 53 is at a radially inner position than the slewing path ST. The antenna 120 supported by the left antenna support member 50 is at a radially inner position than the slewing path ST.

In the hydraulic excavator 100, the right weight recess part 31 at the upper end of the right portion of the counterweight 20 defines a new space below the weight top surface 22 for the fixed attachment of the first fixed part 41A, the second fixed part 42A, and the third fixed part 43A to the upper end of the counterweight 20 in a state where the first fixed part 41A and the third fixed part 43A are at positions deviating from the position of the second fixed part 42A in the up-down direction. The antenna support member 40 fixedly attached to the upper end of the counterweight 20 in the state where the first fixed part 41A and the third fixed part 43A are at the positions deviating from the position of the second fixed part 42A in the up-down direction is more stably supported by the counterweight 20 than an antenna support member including a first fixed part, a second fixed part, and a third fixed part arranged, for example, horizontally next to each other on the weight top surface 22. Moreover, the first fixed part 41A, the second fixed part 42A, and the third fixed part 43A are fixed to the weight recess part 31. This eliminates the need to ensure an enough space on the weight top surface 22 for the fixation of the fixed parts 41A, 42A, 43A. Thus, despite the limited space on the weight top surface 22, the antenna support member 40 is consequently attachable to the upper end of the right portion of the counterweight 20 in a state where the antenna support member 40 is stably supported by using the new space defined by the weight recess part 31.

Furthermore, the left weight recess part 32 at the upper end of the left portion of the counterweight 20 defines a new space below the weight top surface 22 for the fixed attachment of the first fixed part 51A, the second fixed part 52A, and the third fixed part 53A to the upper end of the counterweight 20 in a state where the first fixed part 51A is at a position deviating from the positions of the second fixed part 52A and the third fixed part 53A in the up-down direction. The antenna support member 50 fixedly attached to the upper end of the counterweight 20 in the state where the first fixed part 51A is at the position deviating from the positions of the second fixed part 52A and the third fixed part 53A in the up-down direction is more stably supported by the counterweight 20 than an antenna support member including a first fixed part, a second fixed part, and a third fixed part arranged, for example, horizontally next to each other on the weight top surface 22. Moreover, the first fixed part 51A is fixed to the weight recess part 32. This eliminates the need to ensure an enough space on the weight top surface 22 for the fixation of the first fixed part 51A. Accordingly, the space to be ensured on the weight top surface 22 for the attachment of the antenna support member 50 to the upper end of the counterweight 20 can be smaller. Specifically, weight loads of the antenna support member 50 and the antenna 120 attached thereto are distributed to the first fixed part 51A of the first leg 51, the second fixed part 52A of the second leg 52, and the third fixed part 53A of the third leg 53. Therefore, a total dimension of the second fixed part 52A and the third fixed part 53A may be smaller than, for example, a dimension of a single fixed part solely included in an antenna support member. Similarly, a total of the space on the weight top surface 22 for the fixation of the second fixed part 52A and the space on the weight top surface 22 for the fixation of the third fixed part 53A may be smaller than a space on the weight top surface 22 for fixation of the single fixed part. Thus, despite the limited space on the weight top surface 22, the antenna support member 50 is attachable to the upper end of the counterweight 20 in a state where the antenna support member 50 is stably supported by using the new space defined by the weight recess part 32.

Besides, the right weight recess part 31 is newly defined by two surfaces 311, 312 to which the first fixed part 41A, the second fixed part 42A, and the third fixed part 43A are fixedly attachable at the upper end of the counterweight 20. The recess side surface 312 extends upward from the recess bottom surface 311 to the weight top sur face 22. Therefore, the recess bottom surface 311 and the recess side surface 312 are inevitably at different positions from each other in the up-down direction and the thickness direction D3 of the counterweight 20. Accordingly, the first fixed part 41A and the third fixed part 43A fixedly attached to the recess bottom surface 311 are at the positions deviating from the position of the second fixed part 42A fixedly attached to the recess side surface 312 in the thickness direction D3 as well as in the up-down direction. Specifically, the second fixed part 42A is fixedly attached to the recess side surface 312 above the first fixed part 41A and the third fixed part 43A at an inner position than the first fixed part 41A and the third fixed part 43A in the thickness direction D3, i.e., at a position closer to the weight inner surface 23 than the first fixed part 41A and the third fixed part 43A. Consequently, the right antenna support member 40 is attached to the upper end of the counterweight 20 in a further stable state.

Additionally, the first fixed part 41A and the third fixed part 43A are fixedly attached to the recess bottom surface 311 at a distance therebetween in the direction in which the boundary BP extends. Therefore, the right antenna support member 40 is attached to the upper end of the counterweight 20 in a further stable state.

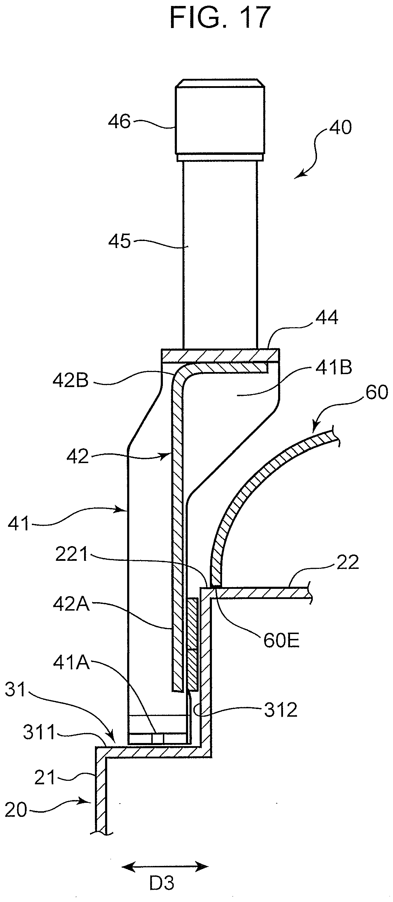

As shown in Fig. 17, the weight top surface 22 has the bonnet mount section 221 on which a part of the outer edge portion 60E of the bonnet 60 is mounted. As shown in Fig. 17, the first leg 41 extends from the first fixed part 41A to the first upper end 41B while avoiding a contact with the bonnet 60 so that the first fixed part 41A is at an outer position than the outer edge portion 60E of the bonnet 60 in the thickness direction D3 of the counterweight 20 and at least a part of the upper end 41B of the first leg 41 is at an inner position than the outer edge portion 60E of the bonnet 60 in the thickness direction D3. In the short rear tail swing hydraulic excavator according to the embodiment, when the outer edge portion 60E of the bonnet 60 is mounted on the bonnet mount section 221 of the weight top surface 22, i.e., even when the outer edge portion 60E of the bonnet 60 is located closer to the weight recess part 31 of the counterweight 20, at least a part of the upper end 41B of the first leg 41 can be at an inner position than the outer edge portion 60E of the bonnet 60 in the thickness direction D3. The third leg 43 has the same configuration as the first leg 41. Hence, each of the antenna attachment part 45 supported by the plurality of legs including the first leg 41 and the third leg 43, and the antenna 120 attached thereto is arrangeable at a further inner position in the thickness direction D3. This arrangement can further effectively suppress a contact of the antenna 120 with peripheral elements in a slewing operation.

Moreover, the left weight recess part 32 is newly defined by the two surfaces, i.e., the recess bottom surface 321 and the recess side surface 322, to which the first fixed part 51A of the first leg 51 in the left antenna support member 50 is fixedly attachable at the upper end of the counterweight 20. This can increase the number of selectable surfaces to which the first fixed part 51A is fixedly attachable. In this manner, the first fixed part 51A is fixedly attachable to a further suitable surface depending on the shape of the counterweight 20 and the shape of the bonnet 60 for different kinds of working machines. The weight recess part 32 and the weight top surface 22 are at different positions from each other in the up-down direction and in the thickness direction D4 of the counterweight 20. Accordingly, the first fixed part 51A fixed to the weight recess part 32 is at a position deviating from the positions of the second fixed part 52A and the third fixed part 53A fixedly attached to the weight top surface 22 in the thickness direction D4 as well as in the up-down direction. Specifically, each of the second fixed part 52A and the third fixed part 53A is fixedly attached to the weight top surface 22 above the first fixed part 51A at an inner position than the first fixed part 51A in the thickness direction D4, i.e., at a position closer to the weight inner surface 23 than the first fixed part 51A. Consequently, the left antenna support member 50 is attachable to the upper end of the counterweight 20 in a further stable state.

The second fixed part 52A, the first fixed part 51A, and the third fixed part 53A are arranged in an order thereof at intervals in the direction D2 in which the weight top surface 22 extends. Therefore, the left antenna support member 50 is further stably supported at the upper end of the counterweight 20.

Each of the antenna support members 40, 50 and the antennas 120, 120 respectively supported by the antenna support members is at the radially inner position than the slewing path ST. This arrangement can effectively suppress a contact of the antenna support members 40, 50 and the antennas 120, 120 with the peripheral elements in a slewing operation.

In the right antenna support member 40, the bolts (lower bolts) for fixedly attaching the first fixed part 41A and the third fixed part 43A respectively to the recess bottom surface 311 are threaded with the corresponding threaded holes in a state where the shafts of the bolts face in a direction perpendicular to the recess bottom surface 311, and the bolt (upper bolt) for fixedly attaching the second fixed part 42A to the recess side surface 312 is threaded with the threaded hole in a state where the shaft of the bolt faces in a direction perpendicular to the recess side surface 312. In the left antenna support member 50, the bolt (lower bolt) for fixedly attaching the first fixed part 51A to the recess side surface 322 is threaded with the threaded hole in a state where the shaft of the bolt faces in a direction perpendicular to the recess side surface 322, and the bolts (upper bolts) for fixedly attaching the second fixed part 52A and the third fixed part 53A respectively to the top weight top surface 22 are threaded with the corresponding threaded holes in a state where the shafts of the bolts face in a direction perpendicular to the weight top surface 22. In both the left and right members, each upper bolt is at a position deviating upward from the position of each corresponding lower bolt, and the shaft of the upper bolt faces in the direction different from the direction in which the lower bolt faces. In this configuration, the right and left antenna support members 40, 50 are attachable to the upper end of the counterweight 20 in a further stable state.

Moreover, in the embodiment, the configuration where each of the fixed parts in the weight recess parts 31, 32 and the antenna support members 40, 50 are provided at the upper end of the counterweight 20 allows the worker to attach the antennas 120, 120 to the antenna support members 40, 50 and detach the antennas 120, 120 from the antenna support members 40, 50 more effectively than a configuration where, for example, at least a part of fixed parts is provided on a bonnet.

### Modifications

Heretofore, the working machine according to the embodiment of the present disclosure is described, but the present disclosure is not limited to this embodiment and include, for example, the following modifications.

### (A) Working machine

The working machine is described as a short rear tail swing hydraulic excavator in the embodiment, but may be other working machine of a small type except such a hydraulic excavator.

### (B) Weight recess part

Although the weight recess part is defined by the weight recess bottom surface and the weight recess side surface in the embodiment, the weight recess part may be defined only by the recess side surface without the recess bottom surface. In this case, the weight recess side surface defining the weight recess part has a lower end (lower edge) connected to the weight outer surface 21, and an upper end (upper edge) connected to the weight top surface 22.

### (C) Fixed part

In the embodiment, the first fixed part 51A in the left antenna support member 50 is fixedly attached only to the recess side surface 322 defining the left weight recess part 32, but may be fixedly attached to both the recess bottom surface 321 and the recess side surface 322, or may be fixedly attached only to the recess bottom surface 321.

Although the first fixed part, the second fixed part, and the third fixed part are fixed with the corresponding bolts in the embodiment, the fixing way is not limited to the bolts. For instance, in a case where the antenna support member is not required to be detached from the upper end of the counterweight, each of the fixed parts may be fixedly attached to the upper end of the counterweight by other fixing way, e.g., welding.

### (D) Bonnet

In the embodiment, the first fixed part, the second fixed part, and the third fixed part are fixedly attached to the upper end of the counterweight 20, thereby stably supporting the antenna support member. Under the circumstances, in a case where the antenna support member further includes an additional leg, the additional leg may have another fixed part fixedly attached to the bonnet 60 in an auxiliary manner. The fixed attachment to the bonnet 60 is sufficient to serve as an auxiliary support, and thus the resultant reinforcement of the bonnet 60 is not indispensable.

### (E) Leg

Although the antenna support member includes the first leg, the second leg, and the third leg in the embodiment, the third leg is excludable.

The present disclosure has been made to provide a working machine of a small type which enables attachment of an antenna support member to an upper end of a counterweight in a state where the antenna support member is stably supported thereon.

A provided working machine includes: an upper frame slewably mounted on a lower body; a bonnet which covers a machine chamber defined on the upper frame from above; a counterweight supported on a rear portion of the upper frame, and having: a weight outer surface having such a shape as to cover at least a part of left and right portions of the machine chamber and cover a rear portion thereof; a weight inner surface located opposite the weight outer surface and closer to the machine chamber than the weight outer surface; and a weight top surface extending along an upper end of the weight outer surface between the weight outer surface and the weight inner surface; and an antenna support member having an antenna attachment part to which an antenna is attachable; and a plurality of legs for supporting the antenna attachment part. The counterweight has a weight recess part recessed from the weight outer surface toward the weight inner surface at the upper end of the weight outer surface. The legs include a first leg having a first fixed part fixed to the weight recess part, and a second leg having a second fixed part fixed to the weight recess part or the weight top surface at a position deviating upward from the first fixed part.

In the working machine, the weight recess part defined at the upper end of the counterweight, i.e., the weight recess part recessed from the weight outer surface toward the weight inner surface at the upper end of the weight outer surface, defines a new space below the weight top surface for the fixed attachment of the first fixed part and the second fixed part to the upper end of the counterweight in a state where the first fixed part and the second fixed part are at positions deviating from each other in the up-down direction. The antenna support member including the first fixed part and the second fixed part fixedly attached to the upper end of the counterweight at the positions deviating from each other in the up-down direction is more stably supported by the counterweight than an antenna support member including a first fixed part and a second fixed part arranged, for example, horizontally next to each other on the weight top surface. Moreover, at least the first fixed part among the first fixed part and the second fixed part is fixed to the weight recess part. This eliminates the need to ensure an enough space on the weight top surface for the fixation of the first fixed part. Accordingly, the space to be ensured on the weight top surface for the attachment of the antenna support member to the upper end of the counterweight can be smaller. Specifically, weight loads of the antenna support member and the antenna attached thereto are distributed to the first fixed part of the first leg and the second fixed part of the second leg. Hence, even in a case where the second fixed part is fixedly attached to the weight top surface, the second fixed part may have, for example, a smaller dimension than a dimension of a single fixed part solely included in an antenna support member. Thus, a smaller space on the weight top surface may be sufficient for the fixation of the smaller second fixed part. As described heretofore, despite the limited space on the weight top surface in the working machine, the antenna support member is attachable to the upper end of the counterweight in the state where the antenna support member is stably supported by using the new space defined by the weight recess part.

It is noted here that the working machine according to the present disclosure does not exclude fixedly attaching a fixed part of a corresponding leg other than the first leg and the second leg among the legs in the antenna support member to the bonnet in an auxiliary manner. Specifically, in the working machine, the first fixed part and the second fixed part are fixedly attached to the upper end of the counterweight at the positions deviating from each other in the up-down direction, thereby stably supporting the antenna support member. In this arrangement, even if the fixed part of the corresponding leg is fixedly attached to the bonnet, the fixed attachment to the bonnet is sufficient to serve as an auxiliary support, and thus the resultant reinforcement of the bonnet is not indispensable.

In the working machine, the weight recess part is preferably defined by a recess bottom surface extending from the weight outer surface toward the weight inner surface and a recess side surface extending upward from the recess bottom surface to the weight top surface. The first fixed part is preferably fixedly attached to the recess bottom surface and the second fixed part is fixedly attached to the recess side surface. In this configuration, the weight recess part is newly defined by the two surfaces to which the first fixed part and the second fixed part are fixedly attachable at the upper end of the counterweight. Of the two surfaces, the first fixed part is fixedly attached to the recess bottom surface and the second fixed part is fixedly attached to the recess side surface. This configuration eliminates the need to ensure an enough space on the weight top surface of the counterweight for the fixation of each of the first fixed part and the second fixed part. The recess side surface extends upward from the recess bottom surface to the weight top surface. Therefore, the recess bottom surface and the recess side surface are inevitably at different positions from each other in the up-down direction and the thickness direction of the counterweight. Accordingly, the first fixed part fixedly attached to the recess bottom surface and the second fixed part fixedly attached to the recess side surface are at positions deviating from each other in the thickness direction as well as in the up-down direction. Specifically, the second fixed part is fixedly attached to the weight recess side surface above the first fixed part at an inner position than the first fixed part in the thickness direction, i.e., at a position closer to the weight inner surface than the first fixed part. Consequently, the antenna support member is attached to the upper end of the counterweight in a further stable state.

In the working machine, the legs preferably further include a third leg having a third fixed part fixedly attached to the recess bottom surface at a distance from the first fixed part in a direction in which a boundary between the recess bottom surface and the recess side surface extends. In this configuration, the first fixed part and the third fixed part are fixedly attached to the recess bottom surface at a distance therebetween in the direction in which the boundary extends. Consequently, the antenna support member is attached to the upper end of the counterweight in a still further stable state.

In the working machine, it is preferable that the weight top surface has a bonnet mount section on which at least a part of an outer edge portion of the bonnet is mounted, and the first leg further has a first upper end connected to the antenna attachment part, the first leg extending from the first fixed part to the first upper end while avoiding a contact with the bonnet so that the first fixed part is at an outer position than the outer edge portion of the bonnet in a thickness direction of the counterweight and at least a part of the first upper end is at an inner position than the outer edge portion of the bonnet in the thickness direction. In this configuration, when the outer edge portion of the bonnet is mounted on the bonnet mount section of the weight top surface, i.e., even when the outer edge portion of the bonnet is located closer to the weight recess part of the counterweight, at least a part of the first upper end of the first leg can be at an inner position than the outer edge portion of the bonnet in the thickness direction. Hence, each of the antenna attachment part supported by the plurality of legs including the first leg, and the antenna attached thereto is arrangeable at a further inner position in the thickness direction. This arrangement can further effectively suppress a contact of the antenna with peripheral elements in a slewing operation.

In the working machine, it is preferable that the weight recess part is defined by a recess bottom surface extending from the weight outer surface toward the weight inner surface and a recess side surface extending upward from the recess bottom surface to the weight top surface, and the first fixed part is fixedly attached to at least one of the recess bottom surface and the recess side surface, and the second fixed part is fixedly attached to the weight top surface. In this configuration, the weight recess part is newly defined by the two surfaces, i.e., the recess bottom surface and the recess side surface, to which the first fixed part is fixedly attachable, so that the first fixed part of the first leg is fixedly attached to at least one of the recess bottom surface and the recess side surface at the upper end of the counterweight. This can increase the number of selectable surfaces to which the first fixed part is fixedly attachable. In this manner, the first fixed part is fixedly attachable to a further suitable surface depending on the shape of the counterweight and the shape of the bonnet for different kinds of working machines. The weight recess part and the weight top surface are at different position from each other in the up-down direction and in the thickness direction of the counterweight. Accordingly, the first fixed part fixed to the weight recess part and the second fixed part fixedly attached to the weight top surface are at positions deviating from each other in the thickness direction as well as in the up-down direction. Specifically, the second fixed part is fixedly attached to the weight top surface above the first fixed part at an inner position than the first fixed part in the thickness direction, i.e., at a position closer to the weight inner surface than the first fixed part. Consequently, the antenna support member is attached to the upper end of the counterweight in a further stable state.

In the working machine, the legs preferably further include a third leg having a third fixed part fixedly attached to the weight top surface at a distance from the second fixed part in a direction in which the weight top surface extends. In this configuration, the second fixed part and the third fixed part are fixedly attached to the weight top surface of the counterweight at a distance therebetween in the direction in which the weight top surface extends. Therefore, the antenna support member is further stably supported at the upper end of the counterweight.

In the working machine, the second fixed part, the first fixed part, and the third fixed part are preferably arranged in an order thereof at intervals in a direction in which the weight top surface extends when the second fixed part, the first fixed part, and the third fixed part are viewed in a thickness direction of the counterweight. In this configuration, the second fixed part, the first fixed part, and the third fixed part are arranged at intervals in the direction in which the weight top surface extends. Therefore, the antenna support member is further stably supported at the upper end of the counterweight.

In the working machine, preferably, each of the first leg and the second leg is at a radially inner position than a circular slewing path on which a section of the weight outer surface having a maximum slewing radius passes in a slewing operation. This arrangement can further effectively suppress a contact of the first and second legs with peripheral elements in a slewing operation. The weight recess part in the working machine is defined to be recessed from the weight outer surface toward the weight inner surface at the upper end of the weight outer surface, and thus is at a radially inner position than the slewing path. The weight recess part at this position can, despite the limited space on the weight top surface, contribute to the arrangement of each of the first leg and the second leg at the radially inner position than the slewing path with the first fixed part and the second fixed part at positions deviating from each other in the up-down direction.

Although the present disclosure has been fully described by way of example with reference to the accompanying drawings, it is to be understood that various changes and modifications will be apparent to those skilled in the art. Therefore, unless otherwise such changes and modifications depart from the scope of the present disclosure hereinafter defined by the appended claims, they should be construed as being included therein.

## Claims

1. A working machine (100), comprising:
an upper frame (10) slewably mounted on a lower body (101);
a bonnet (60) which covers a machine chamber (90) defined on the upper frame (10) from above;
a counterweight (20) supported on a rear portion of the upper frame (10), and having: a weight outer surface (21) having such a shape as to cover at least a part of left and right portions of the machine chamber (90) and cover a rear portion thereof; a weight inner surface (23) located opposite the weight outer surface (21) and closer to the machine chamber (90) than the weight outer surface (21); and a weight top surface (22) extending along an upper end of the weight outer surface Z (21) between the weight outer surface (21) and the weight inner surface (23); and
an antenna support member (40,50) having an antenna attachment part (45,55) to which an antenna is attachable;
**characterised in that** the antenna support member (40, 50) has a plurality of legs (41, 42, 43, 51, 52, 53) for supporting the antenna attachment part,
the counterweight has a weight recess part (31,32) recessed from the weight outer surface toward the weight inner surface at the upper end of the weight outer surface, and
the legs include a first leg (41, 51) having a first fixed part (41A, 51A) fixed to the weight recess part, and a second leg (42, 52) having a second fixed part (42A, 52A) fixed to the weight recess part or the weight top surface at a position deviating upward from the first fixed part.

2. The working machine according to claim 1, wherein
the weight recess part is defined by a recess bottom surface extending from the weight outer surface toward the weight inner surface and a recess side surface extending upward from the recess bottom surface to the weight top surface, and
the first fixed part is fixedly attached to the recess bottom surface and the second fixed part is fixedly attached to the recess side surface.

3. The working machine according to claim 2, wherein
the legs further include a third leg having a third fixed part fixedly attached to the recess bottom surface at a distance from the first fixed part in a direction in which a boundary between the recess bottom surface and the recess side surface extends.

4. The working machine according to claim 2 or 3, wherein
the weight top surface has a bonnet mount section on which at least a part of an outer edge portion of the bonnet is mounted, and
the first leg further has a first upper end connected to the antenna attachment part, the first leg extending from the first fixed part to the first upper end while avoiding a contact with the bonnet so that the first fixed part is at an outer position than the outer edge portion of the bonnet in a thickness direction of the counterweight and at least a part of the first upper end is at an inner position than the outer edge portion of the bonnet in the thickness direction.

5. The working machine according to claim 1, wherein
the weight recess part is defined by a recess bottom surface extending from the weight outer surface toward the weight inner surface and a recess side surface extending upward from the recess bottom surface to the weight top surface, and
the first fixed part is fixedly attached to at least one of the recess bottom surface and the recess side surface, and the second fixed part is fixedly attached to the weight top surface.

6. The working machine according to claim 5, wherein
the legs further include a third leg having a third fixed part fixedly attached to the weight top surface at a distance from the second fixed part in a direction in which the weight top surface extends.

7. The working machine according to claim 6, wherein,
the second fixed part, the first fixed part, and the third fixed part are arranged in an order thereof at intervals in a direction in which the weight top surface extends when the second fixed part, the first fixed part, and the third fixed part are viewed in a thickness direction of the counterweight.

8. The working machine according to any one of claims 1 to 7, wherein
each of the first leg and the second leg is at a radially inner position than a circular slewing path on which a section of the weight outer surface having a maximum slewing radius passes in a slewing operation.

## Patentansprüche

1. Arbeitsmaschine (100) mit:
einem oberen Rahmen (10), der schwenkbar auf einem unteren Körper (101) montiert ist;
einer Haube (60), die eine Maschinenkammer (90), die auf dem oberen Rahmen (10) definiert ist, von oben bedeckt;
einem Gegengewicht (20), das auf einem hinteren Abschnitt des oberen Rahmens (10) gestützt ist und Folgendes hat: eine Gewichtsaußenfläche (21), die eine derartige Form hat, dass zumindest ein Teil eines linken und rechten Abschnittes der Maschinenkammer (90) bedeckt ist und ein hinterer Abschnitt von dieser bedeckt ist; eine Gewichtsinnenfläche (23), die entgegengesetzt zur Gewichtsaußenfläche (21) angeordnet ist und näher zu der Maschinenkammer (90) als die Gewichtsaußenfläche (21) ist; und eine Gewichtsoberfläche (22), die sich entlang eines oberen Endes der Gewichtsaußenfläche (21) zwischen der Gewichtsaußenfläche (21) und der Gewichtsinnenfläche (23) erstreckt; und
einem Antennenstützelement (40, 50), das einen Antennenanbringabschnitt (45, 55) hat, an dem eine Antenne anbringbar ist;
**dadurch gekennzeichnet, dass**
das Antennenstützelement (40, 50) eine Vielzahl an Füßen (41, 42, 43, 51, 52, 53) zum Stützen des Antennenanbringabschnittes hat,
das Gegengewicht ein Gewichtsvertiefungsabschnitt (31, 32) hat, das von der Gewichtsaußenfläche zu der Gewichtsinnenfläche an dem oberen Ende der Gewichtsaußenfläche vertieft ist, und
die Füße einen ersten Fuß (41, 51) mit einem ersten fixierten Abschnitt (41A, 51A), der an dem Gewichtsvertiefungsabschnitt fixiert ist, und einen zweiten Fuß (42, 52) umfassen, der einen zweiten fixierten Abschnitt (42A, 52A) hat, der an dem Gewichtsvertiefungsabschnitt oder der Gewichtsoberfläche an einer Position, die von dem ersten fixierten Abschnitt nach oben abweicht, fixiert ist.

2. Arbeitsmaschine gemäß Anspruch 1, wobei
der Gewichtsvertiefungsabschnitt durch eine Vertiefungsbodenfläche, die sich von der Gewichtsaußenfläche zu der Gewichtsinnenfläche erstreckt, und eine Vertiefungsseitenfläche definiert ist, die sich von der Vertiefungsbodenfläche zu der Gewichtsoberfläche nach oben erstreckt, und
der erste fixierte Abschnitt an der Vertiefungsbodenfläche fest angebracht ist, und der zweite fixierte Abschnitt an der Vertiefungsseitenfläche fest angebracht ist.

3. Arbeitsmaschine gemäß Anspruch 2, wobei
die Füße des Weiteren einen dritten Fuß umfassen, der einen dritten fixierten Abschnitt hat, der an der Vertiefungsbodenfläche bei einem Abstand von dem ersten fixierten Abschnitt in einer Richtung fest angebracht ist, in der sich eine Grenze zwischen der Vertiefungsbodenfläche und der Vertiefungsseitenfläche erstreckt.

4. Arbeitsmaschine gemäß Anspruch 2 oder 3, wobei
die Gewichtsoberfläche einen Haubenmontageabschnitt hat, an dem zumindest ein Teil eines Außenrandabschnittes der Haube montiert ist, und
der erste Fuß des Weiteren ein erstes oberes Ende hat, das mit dem Antennenanbringabschnitt verbunden ist, wobei der erste Fuß sich von dem ersten fixierten Abschnitt zu dem ersten oberen Ende erstreckt, während ein Kontakt mit der Haube vermieden ist, sodass der erste fixierte Abschnitt an einer weiter außen befindlichen Position als der Außenrandabschnitt der Haube in einer Dickenrichtung des Gegengewichts ist und zumindest ein Teil des ersten oberen Endes an einer weiter innen befindlichen Position als der Außenrandabschnitt der Haube in der Dickenrichtung ist.

5. Arbeitsmaschine gemäß Anspruch 1, wobei
der Gewichtsvertiefungsabschnitt durch eine Vertiefungsbodenfläche, die sich von der Gewichtsaußenfläche zu der Gewichtsinnenfläche erstreckt, und eine Vertiefungsseitenfläche definiert ist, die sich von der Vertiefungsbodenfläche zu der Gewichtsoberfläche nach oben erstreckt, und
der erste fixierte Abschnitt an zumindest entweder der Vertiefungsbodenfläche und/oder der Vertiefungsseitenfläche fest angebracht ist, und der zweite fixierte Abschnitt an der Gewichtsoberfläche fest angebracht ist.

6. Arbeitsmaschine gemäß Anspruch 5, wobei
die Füße des Weiteren einen dritten Fuß umfassen, der einen dritten fixierten Abschnitt hat, der an der Gewichtsoberfläche bei einem Abstand von dem zweiten fixierten Abschnitt in einer Richtung, in der sich die Gewichtsoberfläche erstreckt, fest angebracht ist.

7. Arbeitsmaschine gemäß Anspruch 6, wobei
der zweite fixierte Abschnitt, der erste fixierte Abschnitt und der dritte fixierte Abschnitt in dieser Reihenfolge bei Intervallen in einer Richtung angeordnet sind, in der sich die Gewichtsoberfläche erstreckt, wenn der zweite fixierte Abschnitt, der erste fixierte Abschnitt und der dritte fixierte Abschnitt in einer Dickenrichtung des Gegengewichts betrachtet werden.

8. Arbeitsmaschine gemäß einem der Ansprüche 1 bis 7, wobei
sowohl der erste Fuß als auch der zweite Fuß an einer radial weiter innen befindlichen Position als ein kreisartiger Schwenkpfad sind, an dem ein Abschnitt der Gewichtsaußenfläche, der einen maximalen Schwenkradius hat, bei einem Schwenkbetrieb passiert.

## Revendications

1. Engin de travaux (100), comprenant :
une tourelle (10) installée à pivotement sur un châssis inférieur (101) ;
un capot (60) qui couvre un compartiment d'engin (90) défini sur la tourelle (10) depuis le dessus ;
un contrepoids (20) supporté sur une partie arrière de la tourelle (10) et comportant : une surface de poids extérieure (21) présentant une forme prévue pour couvrir au moins partiellement des parties gauche et droite du compartiment d'engin (90) et couvrir une partie arrière de celui-ci ; une surface de poids intérieure (23) située à l'opposé de la surface de poids extérieure (21) et plus près du compartiment d'engin (90) que la surface de poids extérieure (21) ; et une surface de poids supérieure (22) s'étendant le long d'une extrémité supérieure de la surface de poids extérieure (21) entre la surface de poids extérieure (21) et la surface de poids intérieure (23) ; et
un élément de support d'antenne (40, 50) comportant une partie d'attache d'antenne (45, 55) à laquelle une antenne peut être attachée ;
**caractérisé en ce que** l'élément de support d'antenne (40, 50) comporte une pluralité de pattes (41, 42, 43, 51, 52, 53) destinées à supporter la partie d'attache d'antenne, le contrepoids comporte une partie de poids en renfoncement (31, 32), en renfoncement relativement à la surface de poids extérieure en direction de la surface de poids intérieure au niveau de l'extrémité supérieure de la surface de poids extérieure, et les pattes comprennent une première patte (41, 51) comportant une première partie fixe (41A, 51A) fixée à la partie de poids en renfoncement, et une deuxième patte (42, 52) comportant une deuxième partie fixe (42A, 52A) fixée à la partie de poids en renfoncement ou à la surface de poids supérieure au niveau d'un emplacement décalé vers le haut par rapport à la première partie fixe.

2. Engin de travaux selon la revendication 1, dans lequel
la partie de poids en renfoncement est définie par une surface de fond de renfoncement s'étendant de la surface de poids extérieure en direction de la surface de poids intérieure et une surface latérale de renfoncement s'étendant vers le haut de la surface de fond de renfoncement à la surface de poids supérieure, et
la première partie fixe est attachée fixement à la surface de fond de renfoncement et la deuxième partie fixe est attachée fixement à la surface latérale de renfoncement.

3. Engin de travaux selon la revendication 2, dans lequel
les pattes comprennent, en outre, une troisième patte comportant une troisième partie fixe attachée fixement à la surface de fond de renfoncement à une certaine distance de la première partie fixe dans une direction dans laquelle s'étend une limite entre la surface de fond de renfoncement et la surface latérale de renfoncement.

4. Engin de travaux selon la revendication 2 ou 3, dans lequel
la surface de poids supérieure comporte une section d'assujettissement de capot sur laquelle est assujettie au moins partiellement une partie bord extérieur du capot, et
la première patte comporte, en outre, une première extrémité supérieure raccordée à la partie d'attache d'antenne, la première patte s'étendant de la première partie fixe à la première extrémité supérieure en évitant d'entrer en contact avec le capot de telle sorte que la première partie fixe est située à un emplacement plus à l'extérieur que la partie bord extérieur du capot dans une direction d'épaisseur du contrepoids et au moins une partie de la première extrémité supérieure est située à un emplacement plus à l'intérieur que la partie bord extérieur du capot dans la direction d'épaisseur.

5. Engin de travaux selon la revendication 1, dans lequel
la partie de poids en renfoncement est définie par une surface de fond de renfoncement s'étendant de la surface de poids extérieure en direction de la surface de poids intérieure et une surface latérale de renfoncement s'étendant vers le haut de la surface de fond de renfoncement à la surface de poids supérieure, et
la première partie fixe est attachée fixement à la surface de fond de renfoncement et/ou à la surface latérale de renfoncement, et la deuxième partie fixe est attachée fixement à la surface de poids supérieure.

6. Engin de travaux selon la revendication 5, dans lequel
les pattes comprennent, en outre, une troisième patte comportant une troisième partie fixe attachée fixement à la surface de poids supérieure à une certaine distance de la deuxième partie fixe dans une direction dans laquelle s'étend la surface de poids supérieure.

7. Engin de travaux selon la revendication 6, dans lequel
la deuxième partie fixe, la première partie fixe et la troisième partie fixe sont disposées dans cet ordre et mutuellement espacées dans une direction dans laquelle s'étend la surface de poids supérieure en regardant la deuxième partie fixe, la première partie fixe et la troisième partie fixe dans une direction d'épaisseur du contrepoids.

8. Engin de travaux selon l'une quelconque des revendications 1 à 7, dans lequel
chacune de la première patte et la deuxième patte est située à un emplacement radialement plus à l'intérieur qu'un chemin de pivotement circulaire sur lequel passe une section de la surface de poids extérieure présentant un rayon de pivotement maximal lors d'une opération de pivotement.
